# EUROPEAN PATENT APPLICATION

(11) **EP 1 990 848 A1**
(43) Date of publication of application: **12.11.2008**
(21) Application number: 08151761.7
(22) Date of filing: 21.02.2008
(51) Int. Cl.: H01M 2/02, H01M 2/06

(54) **Lithium secondary battery with a laminate housing material**

(30) Priority: 21.02.2007 JP 2007040538; 21.02.2007 JP 2007040539; 05.02.2008 JP 2008025118; 05.02.2008 JP 2008025119
(71) Applicant: Riken Technos Corporation, Tokyo 103-8438 (JP)
(72) Inventor: Sanada, Satoshi, c/o Riken Technos Corporation, Tokyo, 103-8438 (JP); Sekine, Yutaka, c/o Riken Technos Corporation, Tokyo, 103-8438 (JP)
(74) Representative: Hatzmann, Martin

(57) **Abstract**

[Purpose] To provide a lithium secondary battery with excellent productivity, wherein deterioration of the housing material due to penetration of moisture into the inside of the battery and hydrogen fluoride generating inside the battery are prevented.

[Solution] A lithium secondary battery wherein a power generating element comprising a positive electrode material layer, a negative electrode material layer and a layer having a lithium salt electrolyte is sealed in a housing composed of a laminate housing material comprising a metallic layer and a synthetic resin layer, characterized in that an absorption sheet is sealed along with the power generating element in the housing, wherein the absorption sheet comprises an absorption layer composed of at least one resin layer containing inorganic particles having an acid absorption function and inorganic particles having a water absorption function, said absorption layer containing at least 5 parts by weight of a total of the inorganic particles having acid absorption function and the inorganic particles having water absorption function relative to 100 parts by weight of the resin.

## Description

### [Field of the Technology]

The present invention relates to a lithium secondary battery which may be used as a power source for electronic devices, a power source equipped in electric automobiles, or used to store electricity generated by fuel cells or solar cells. More specifically, the present invention relates to a lithium secondary battery with a laminate housing, which battery exhibits excellent durability, safety and processability.

### [Prior Art]

Metallic plates, such as stainless steel plates, have been used as a case material for sealed type batteries. However, the metallic plates such as stainless steel plates have too strong rigidity and therefore, they are not proper to be processed into a flat thin form. In addition, when these are used in a thin type battery, an energy density per unit weight of the battery is low due to a high specific gravity of the metal.

For this reason, recent thin type batteries are manufactured using a laminate housing material composed of a metallic foil and a resin film. Compared to a stainless steel plate, such a laminate housing material is lightweight and so pliable so easy to be processed into a flat thin form battery, and can be heat welded. Therefore, it has an advantage that sealing a battery is easier. On the other hand, the laminate housing material has disadvantages that it is more permeable for moisture, particularly in a heat welded part, compared to stainless steel plates.

If the moisture permeability is high, moisture present in the atmosphere penetrates gradually into the inside of the battery. Then, in a lithium secondary battery, a lithium salt electrolyte reacts with the moisture to undergo hydrolysis to generate hydrogen fluoride. As a result, a heat welded part in the laminate housing material and a metallic film deteriorate. This deterioration further facilitates the penetration of the moisture in the atmosphere into the battery so that the deterioration is accelerated. Ultimately, liquid leakage occurs to end a battery life.

In order to extend a life of a battery, penetration of water into the inside of the battery must be prevented as much as possible. To this end, a lithium secondary battery is known. , where a power generating element is stored together with a moisture absorbent in a housing made of a synthetic resin and the housing of the battery is completely sealed in order to prevent penetration of air and moisture from the outside as well as to ensure that moisture is absorbed by the moisture absorption material even if the moisture penetrates inside (e.g., Patent Document 1 as indicated below). In this battery, only moisture is removed and hydrogen fluoride is not removed. Therefore, some moisture is not absorbed and remains, such reacts with a lithium salt electrolyte to form hydrogen fluoride to cause deterioration of an exterior material. The moisture absorption material is in a sheet form where moisture absorbing power is bonded with a binder. Therefore, it may happen that the moisture absorbing powder dissociates from the surface or edge of the moisture absorbing material inside the battery to cause defects in the power generating elements such as electrodes and separators. Further, since the moisture absorbing material has a very high moisture absorption function, it is very difficult to handle the moisture absorbing material in the manufacturing processes of the moisture absorption materials and a lithium secondary battery, which is another problem.

A secondary battery is known where an envelope bag in which an electrolytic solution is sealed is made of a metallic layer and, on the side of the electrolytic solution, a plastic layer, which plastic layer has a function to prevent water from penetrating and a function to prevent acid from penetrating (e.g., Patent Document 2). If an envelope bag is formed in a drawing process, some portion would show less penetration prevention function. Absorption material particles are present, mixed in the plastic layer, to provide the moisture permeation prevention function and the acid permeation prevention function. The particles might cause defects in the envelope bag. Therefore, this technology cannot be used in a field of batteries where a drawing process is applied.

Further, a lithium secondary battery is known where a laminate housing is composed of a metallic thin film and a heat-welding resin film and prepared by sandwiching a moisture absorbent between the layers at parts to be sealed and sealing the periphery of the moisture absorbent by heat welding (e.g., Patent Document 3). In this case, a processing of sandwiching the moisture absorbent in the parts of the laminate to be sealed is difficult to do, and further the adhesion strength at the sealed parts is weak. In order to have strong adhesion strength at the sealed parts, the area of the sealed parts must be large, which causes increase in the amount of the laminate housing material used and a problem in a battery size. In addition, since this battery does not have an acid absorption function, deterioration of the housing material due to generation of hydrogen fluoride cannot be suppressed.
[Patent Document 1] Japanese Patent Application Laid-Open No.2000-243357
[Patent Document 2] Japanese Patent No. 3137061
[Patent Document 3] Japanese Patent Application Laid-Open No. 2003-187762

### [Disclosure of the Invention]

### [Problems to be Solved by the Invention]

The present invention has been made to solve such problems. A purpose of the present invention is to provide a lithium secondary battery in which moisture penetration into the inside of the battery and deterioration of the housing material due to hydrogen fluoride generated inside the battery are prevented and which is easily prepared.

### [Means to Solve the Problems]

The inventors have found that the aforementioned purpose is achieved by a lithium secondary battery wherein a power generating element is sealed in a laminate housing, characterized in that an absorption sheet is sealed along with the power generating element in the housing, wherein the absorption sheet comprises an absorption layer composed of at least one resin layer containing inorganic particles having an acid absorption function and inorganic particles having a water absorption function.

Thus, the present invention is a lithium secondary battery wherein a power generating element comprising a positive electrode material layer, a negative electrode material layer and a layer having a lithium salt electrolyte is sealed in a housing composed of a laminate housing material comprising a metallic layer and a synthetic resin layer, characterized in that an absorption sheet is sealed along with the power generating element in the housing, wherein the absorption sheet comprises an absorption layer composed of at least one resin layer containing inorganic particles having an acid absorption function and inorganic particles having a water absorption function, wherein the absorption layer contains at least 5 parts by weight of a total of the inorganic particles having acid absorption function and the inorganic particles having water absorption function relative to 100 parts by weight of the resin.

### [Effects of the Invention]

According to the present invention, the absorption sheet has both of the acid absorption function and the water absorption function, and is stored inside the lithium secondary battery. Therefore, it effectively absorbs moisture gotten mixed during the manufacturing process of the lithium secondary battery, hydrogen fluoride generated by the moisture thus introduced and moisture penetrated through a fused portion of the housing, and hydrogen fluoride generated by the penetrated moisture to thereby avoid influence of the moisture and the hydrogen fluoride on the power generating elements and deterioration in close adhesiveness at the fused portion of the housing. Accordingly, deterioration of the housing, heat generation and ignition in the battery are suppressed, providing a lithium secondary battery having excellent durability and safety. Further, since the housing material does not contain particles having an acid absorption function or particles having a water absorption function, it can be properly formed in a drawing process. Therefore, the lithium secondary battery of the present invention has excellent processability.

### [Preferred Examples of the Invention]

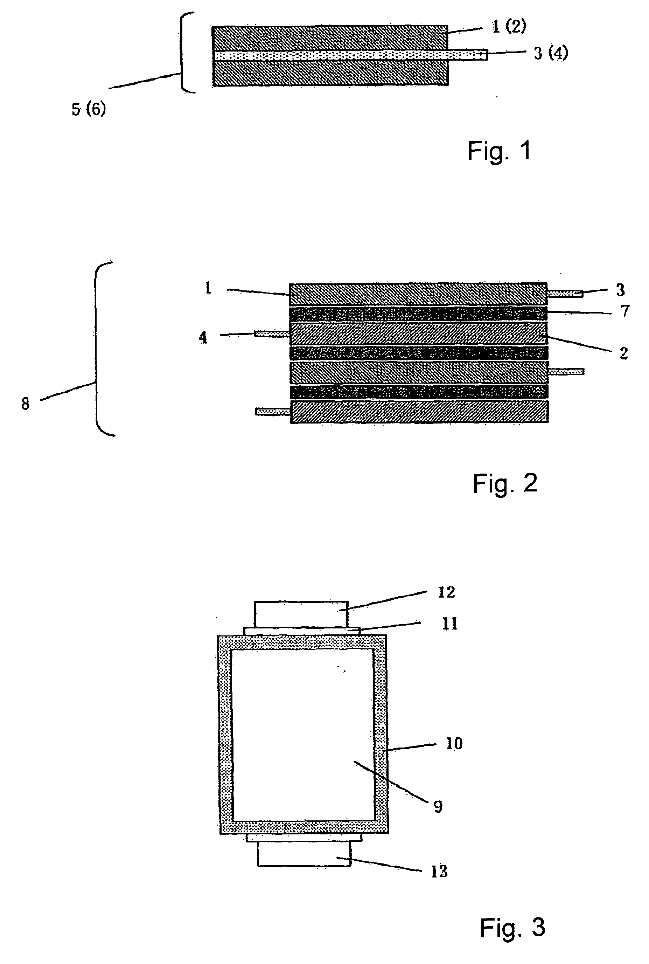

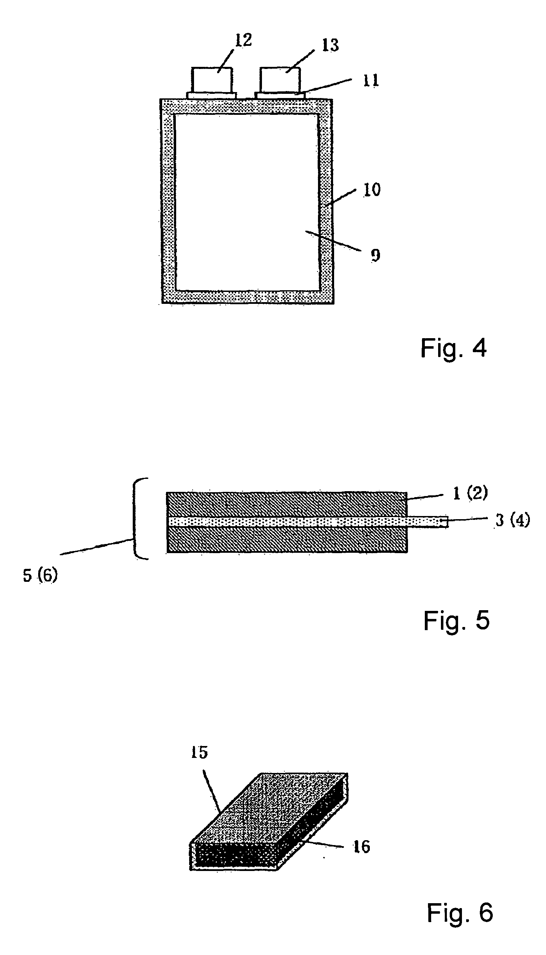

The lithium secondary battery of the present invention will be more specifically described below with reference to the drawings. In the lithium secondary battery of the present invention, the housing is a laminate housing material composed of a metallic layer and a synthetic resin layer, in which housing power generating elements are sealed. Figs. 3 and 4 show an Example of the lithium secondary battery of the present invention. In Figs. 3 and 4, numeral 9 indicates a laminate housing material which forms a housing having a fused sealing portion 10 at the periphery. The laminate housing material 9 is composed of a metallic layer and a synthetic resin layer. For example, a nylon film, an aluminum foil and a polyolefin film are layered in this order. The polyolefin film is fused or bonded by an adhesive to constitute the inner side of the housing. The polyolefin film may be, for example, a polypropylene film, polyethylene film, or modified polyethylene film.

Numerals 12 and 13 represent a positive electrode terminal and a negative electrode terminal, respectively. They are led from the inside to the outside of the housing. They are composed of a metallic material such as aluminum, copper, nickel or stainless steel, and can be in a thin plate form or a mesh form.

A tight-contact film 11 can be inserted between the laminate housing material and the positive electrode terminal or the negative electrode terminal in order to prevent the outside air from penetrating. This tight-contact film is made of a material which can tightly be in contact with the positive electrode terminal and the negative electrode terminal, such as polyolefin resins including polyethylenes, polypropylene, modified polyethylenes and modified polypropylenes.

The housing formed by the laminate housing material may be, for example, in a form of a pouch type or a drawn type. For the pouch type, the laminate housing material is formed into a bag shape, in which a power generating element is stored. The pouch type one may be prepared in one of following manners: the four sides of two sheets of a laminate housing material are heat sealed to form a bag shape; a rectangular laminate housing material is folded at the center line to make the two opposing sides face to each other, and the two sides perpendicular to the center line and, if desired, the center line are heat sealed to form a bag shape, and subsequently a power generating element is inserted via an opening part and then the opening part is heat sealed; or a pair of opposing sides of a rectangular laminate housing material are heat sealed without folding, the housing material is creased so that the heat sealed part faces the center line of the housing material, one of the two opening portions is heat sealed to form a bag shape, subsequently a power generating element is inserted via the opening part and then the opening part is heat sealed. For the drawn type, the laminate housing material is processed so that its sealant layer side is in a concave form using a press machine and a metal mold (drawing process), and a power generating element is stored in this concave portion, on which another laminate housing material is then placed. This other laminate housing material may not be so processed that its sealant layer side is in a concave form. Alternatively, using a single rectangular laminate housing material, a concave portion is formed in one half of the material separated by a center line or concave portions are formed at both sides, and the material is folded at the center line.

The power generating element in the invention may be one which is generally used in a lithium secondary battery, and comprises a positive electrode material layer, a negative electrode material layer and a layer having a lithium salt electrolyte. As seen in Fig. 1, the positive electrode material layer and the negative electrode material layer are provided on current collectors 3 and 4, respectively, to form a positive electrode plate 5 and a negative electrode plate 6, respectively. The positive electrode plate 5 and the negative electrode plate 6 are piled up via a layer 7 containing a lithium salt electrolyte to form a power generating element 8, for example, as seen in Fig. 2.

The positive electrode material and the negative electrode material may contain a conductive auxiliary and a resin in addition to a respective electrode active substance. The conductive auxiliary may be, for example, graphite, carbon black, carbon fibers, and metals such as nickel, aluminum, copper, and silver. The resin may be fluorine resins, and fluorine rubber.

The positive electrode active substance may be lithium transition metal oxide composites such as lithium cobaltate (LiCoO₂), lithium nickelate (LiNiO₂), lithium manganate and (LiMnO₂). In addition, carbon powder such as acetylene black and graphite powder may preferably be admixed in order to improve conductivity of these positive electrode active substances. The negative electrode active substance may be amorphous carbonaceous material such as soft carbon and hard carbon, and carbon powder such as natural graphite.

The positive electrode plate 5 and the negative electrode plate 6 are formed in a thin plate form by coating the positive electrode material 1 and the negative electrode material 2 on the positive electrode current collector 3 and the negative electrode current collector 4, respectively. A material which is preferably used as a current collector may be an aluminum foil as the positive electrode current collector and a copper foil as the negative electrode current collector.

In the power generating element, the positive electrode plate and the negative electrode plate are wound or laminated on each other via a layer 7 containing an electrolyte so that the positive electrode plate and the negative electrode plate are not directly in contact with each other. Generally, the layer 7 containing an electrolyte may be such that a separator made of a porous resin film is impregnated with a liquid or gel-form lithium salt electrolyte. The separator may be, for example, a porous polyethylene separator that is permeable for lithium ions or a laminate separator composed of a porous polypropylene with a porous polyethylene. The separator serves also as such a safety mechanism that if the electrode material or the electrode plate becomes at a high temperature, the separator softens to loose its porosity and, as a result, migration of lithium ions, namely a battery reaction, is suppressed.

The liquid electrolyte (electrolytic solution) is obtained by dissolving a lithium salt electrolyte in a non-aqueous solvent. The gel-form electrolyte is obtained by making a polymeric compound retain the aforementioned liquid electrolyte.

The aforementioned non-aqueous solvent may be, for example, carbonates such as ethylene carbonate, propylene carbonate, butylene carbonate, dimethyl carbonate, diethyl carbonate, and ethyl methyl carbonate; cyclic ethers such as tetrahydrofuran and 2-methyltetrahydrofuran; cyclic ethers such as 1,3-dioxolan and 4-methyldioxolan; lactones such as γ-butyrolactone; and sulforan. 3-Methylsulfuran, dimethoxyethane, diethoxyethane, ethoxymethoxyethane, or ethyldiglime can also be used.

Any material may be used as the electrolyte as long as it generates lithium ions when dissolved in a non-aqueous solvent. One of such or a mixture of such can be used. Examples of such include lithium pentafluorophosphate (LiPF₆), lithium tetrafluoroborate (LiBF₄), lithium hexafluoroarsenate (LiAsF₆), lithium perchlorate (LiClO₄), lithium trifluoromethane sulfonate (LiCF₃SO₃), bis (trifluoromethane sulfonyl) imidolithium (LiN(SO₂CF₃)₂), tris (trifluoromethane sulfonyl) methyl lithium (LiC(SO₂CF₃)₃), lithium tetrachloroaluminate (LiAlCl₄) and lithium hexafluorosilicate (LiSiF₆).

Examples of the polymeric compounds to be used for the gel-form electrolyte include fluoropolymeric compounds such as polyvinylidene fluoride or copolymers of vinylidene fluoride and hexafluoropropylene, polymeric ether compounds such as cross-linked polyethylene oxide or polyethylene oxide, or polyacrylonitrile.

In the lithium secondary battery of the present invention, an absorption sheet is sealed along with the power generating element in the housing. The aforementioned absorption sheet has an absorption layer composed of at least one resin layer containing inorganic particles having an acid absorption function and inorganic particles having a water absorption function. The aforementioned absorption layer may be composed of a single resin layer containing both inorganic particles having an acid absorption function and inorganic particles having a water absorption function, or may be composed of a laminate composed of a resin layer containing inorganic particles having an acid absorption function and a resin layer containing inorganic particles having a water absorption function. The aforementioned absorption layer contains at least 5 parts by weight of a total of the aforementioned inorganic particles having an acid absorption function and inorganic particles having a water absorption function, relative to 100 parts by weight of the resin. The total amount of the aforementioned inorganic particles is preferably 200 parts by weight or less, more preferably from 10 to 150 parts by weight, relative to 100 parts by weight of the resin. If the total amount of the aforementioned inorganic particles is less than the aforementioned lower limit, a sufficient absorption function is not attained. If it is too large, processability into a film is worse. The inorganic particles having an acid absorption function and the inorganic particles having a water absorption may be separate two types of inorganic particles as will be described below, or can be one and the same inorganic particles having both absorption functions. In the former case, the amount of the inorganic particles having an acid absorption function and the amount of the inorganic particles having a water absorption function are preferably each 2.5 parts by weight or more, more preferably each 5 parts by weight or more, relative to 100 parts by weight of the resin.

Any moisture-absorbable materials can be used as the inorganic particles having a water absorption function. However, the material preferably shows less change in volume and state on moisture absorption, such as metal oxides, zeolite, calcined hydrotalcite, hydrotalcite oxide, magnesium sulfate (with 0 to 3 hydrating water molecules), phosphorus pentoxide and calcium chloride. Preferred are metal oxides, zeolite, calcined hydrotalcite, hydrotalcite oxide and magnesium sulfate (with 0 to 3 hydrating water molecules) are desirable, more preferably, zeolite, calcined hydrotalcite, hydrotalcite oxide and magnesium sulfate (with 0 to 3 hydrating water molecules). One kind of the inorganic particles having a water absorption function or a mixture thereof may be used.

The material having moisture absorption property as mentioned above is preferably used in a dehydrated state after dried at a temperature below its decomposition temperature. Hydrotalcite is less moisture absorbable, but calcined hydrotalcite obtained by calcinations at or below 300°C and hydrotalcite oxide obtained by calcinations at or above 300°C are in a dehydrated state have increased moisture absorbability. Accordingly, these are favorably used as a drying agent.

The inorganic particles having an acid absorption function include metal carbonatees, zeolite, hydrotalcite, calcined hydrotalcite, and hydrotalcite oxide. Preferred are zeolite, hydrotalcite, calcined hydrotalcite, and hydrotalcite oxide. One kind of the inorganic particles having an acid absorption function or a mixture thereof may be used.

Any resin that is not easily corroded by an electrolytic solution may be used as the resin for the absorption layer. Preferred are polyethylene, polypropylene, polymethylpentene, ethylene-butene copolymers, ethylene-propylene copolymers, ionomers, modified polyethylenes, modified polypropylenes, ethylene-vinyl acetate copolymers and ethylene vinyl alcohol copolymers. One kind of the aforementioned resins or a mixture thereof may be used.

The absorption sheet preferably has resin layers containing no inorganic particles on both sides of the absorption layer. Usually, a small amount of inorganic particles is added as an additive in the preparation of a resin, such as neutralizing agents, stabilizers, antiblocking agents and nucleating agents. Therefore, the term "inorganic particles" in the expression "resin layers containing no inorganic particles" does not mean the inorganic particles which are inevitably contained as an additive. The aforementioned inorganic particles as an additive are contained in an amount ranging from 0.01 to 0.5 part by weight relative to 100 parts by weight of the resin. However, in a preferred embodiment of the present invention, the resin layers containing no inorganic particles resins do not contain any inorganic particles.

The aforementioned resin layers containing no inorganic particles may prevent contamination of the inside of the lithium secondary battery due to detachment of the inorganic particles having an acid absorption function and the inorganic particles having a water absorption function from the absorption layer, and damage to the power generating element. Further, since the absorption rates of acid and water are depressed, the absorption sheet can be easily handled in the production of the absorption sheet and in the production of the lithium secondary battery. As seen, for instance, in Fig. 5, the absorption sheet comprises an absorption layer 16 laminated with the resin layers 15 containing no inorganic particles on both surfaces. Alternatively, as seen in Fig. 6, the entire absorption layer 16 may be covered with the resin layer 15 containing no inorganic particles. The covering may further prevent contamination of the inside of the lithium secondary battery, and makes it easier to handle the absorption sheet.

Any resin that is not easily corroded by an electrolytic solution can be used as the resin in the aforementioned resin layer containing no inorganic particles. Thermoplastic resins are preferred, such as polyethylene, polypropylene, polymethylpentene, ethylene-butene copolymers, ethylene-propylene copolymers, ionomers, modified polyethylenes, modified polypropylenes, ethylene-vinyl acetate copolymers and ethylene-vinyl alcohol copolymers. One kind of the aforementioned resin or a mixture thereof can be used.

The thickness of the absorption sheet is appropriately set, depending on a mixing ratio between the inorganic particles having an acid absorption function and the inorganic particles having a water absorption function, and a desired period of retaining the function of the absorption sheet. If the resin layer containing no inorganic particles is too thick, the absorption rate of the absorption layer is very slow. Meanwhile, if it is too thin, the absorption rate of the absorption layer is too fast so that the absorption sheet is difficult to handle. In addition, it is necessary to pay consideration to an influence on a thickness of the lithium secondary battery. Preferably, the thickness of the absorption layer ranges from 10 to 1,000 µm, and the thickness of each of the resin layers containing no inorganic particles ranges from 1 to 100 µm. More preferably, the thickness of the absorption layer ranges from 20 to 100 µm, and the thickness of each of the resin layers containing no inorganic particles ranges from 2 to 20 µm.

Regarding a particle diameter of the inorganic particles having an acid absorption function and the inorganic particles having a water absorption function, any particle size is allowable as long as the particle diameter allows one to achieve a desired film thickness. Preferably it ranges from 0.01 to 100 µm, more preferably from 0.1 to 30 µm.

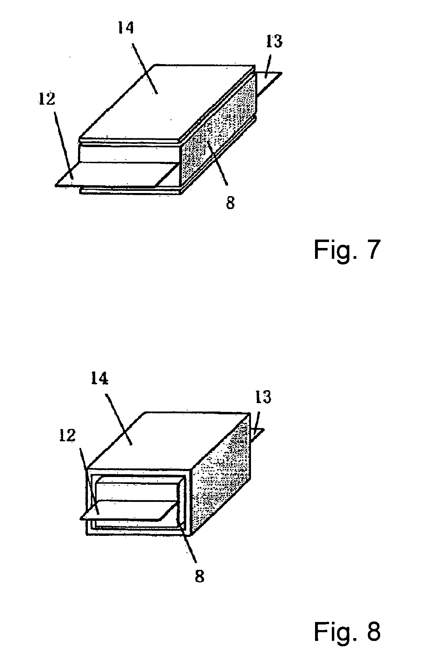

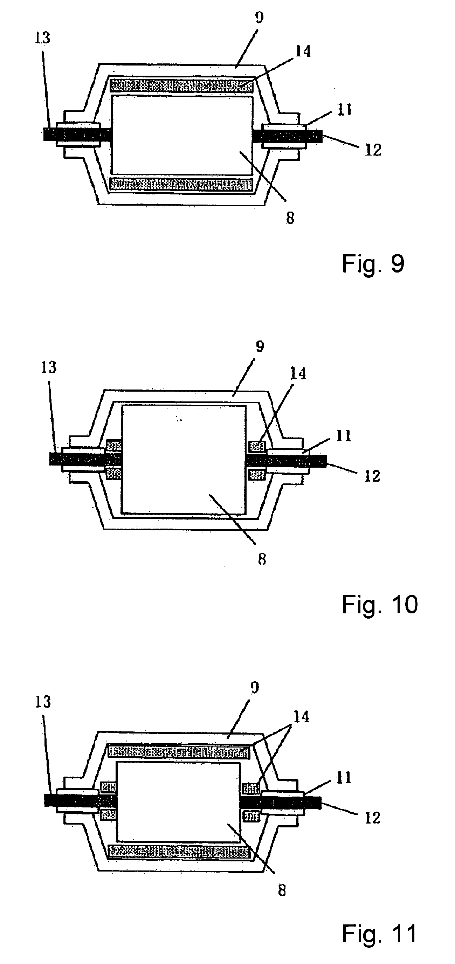

The absorption sheet may be provided anywhere inside the housing of the lithium secondary battery of the invention. For example, it is desirable that two absorption sheets 14 are provided so as to sandwich the power generating element 8, as show in Fig. 7. However, only one sheet may be provided on one side. Further, as seen in Fig. 8, the absorption sheet 14 may be made in a tubular shape and envelop the power generating element 8. Figs. 9 through 11 are cross-sectional views showing examples of the arrangement of the absorption sheet where the absorption sheet 14 is sealed inside the housing. Fig. 9 shows an example where the power generating element 8 is sandwiched. As seen in Fig. 10, the absorption sheet may be provided near the portion where the positive electrode terminal 12 or the negative electrode terminal 13 is lead out to the outside of the laminate housing. Alternatively, as seen in Fig. 11, a combination of the arrangement in Fig. 9 with the arrangement in Fig. 10 may be used.

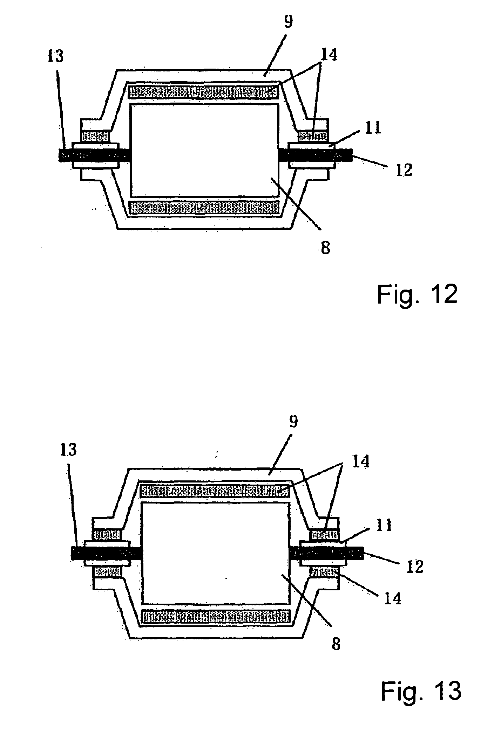

The absorption sheet 14 is provided inside the housing and preferably also at the sealing portion 10 of the laminate housing. In this case, the absorption sheet is provided at least a part of the sealing portion, preferably at the entire part of the sealing portion, as seen in Figs. 12 and 13. As seen in Fig. 12, one absorption sheet may be used at each one sealing portion. Alternatively, as seen in Fig. 13, two absorption sheets may be used at each one sealing portion. The absorption sheet provided at the sealing portion of the housing may efficiently reduce the amount of moisture penetrating via the sealing portion, so that the influence of hydrogen fluoride on the power generating element and the deterioration in the tight-contact at the sealing portion can be avoided for a prolonged period.

The resin in the absorption layer may be one cross-linked by radiation. As the radiation, electron beams and gamma-rays may preferably be used. The cross-linking in the resin improves heat resistance. Accordingly, even if a temperature of the lithium secondary battery becomes high, the inorganic particles having an acid absorption function and the inorganic particles having a water absorption function can be retained safely.

Both or one of the surfaces of the absorption sheet in the present invention surfaces may be treated embossed. The embossing treatment increases the surface area, so that the absorption rates of hydrogen fluoride and water in the battery are increased. In a case where the absorption sheet is provided at the sealing portion, the convex/concave structure formed by embossing treatment plays the role of the exhaust port for air and an electrolytic solution that are present in a part to be heat welded with the housing, so that defects in tight-contact in the welded part is reduced.

The absorption sheet in the present invention may be provided with an adhesive layer or bonding agent layer on both or one of the surfaces. On account of the adhesive layer or bonding agent layer, the absorption sheet is adhered on the laminate housing in the production of a lithium secondary battery so that the position of the absorption sheet can be fixed. Therefore, slippage of the absorption sheet can be prevented in the manufacturing process of the lithium secondary battery.

The absorption sheet in the present invention can be produced as follows: the inorganic particles having an acid absorption function, the inorganic particles having a water absorption function, and the resin are melt kneaded using a known kneader such as an extruder with a single, twin screw or four screw extruder, pressure kneader, or Bunbury mixer, and pelletized; and the resultant pellets are fed to a film-forming apparatus such as a T-die extruder or inflation apparatus. An extruder used for pelletization may be connected directly, or via a gear pump, to a film-forming apparatus, so that the absorption sheet may be prepared without pelletization.

In the case where the absorption sheet has a resin layer containing no inorganic particles on both sides of the absorption layer, the pellets as mentioned above are supplied, along with a resin for the resin layer containing no inorganic particles, to a multi-layer film forming apparatus such as a multi-layer T-die extruder or multi-layer inflation apparatus to thereby provide resin layers containing no inorganic particles on both sides of the absorption layer. An extruder or kneader used for pelletization may be connected directly, or via a gear pump, to a multi-layer film-forming apparatus, so that the absorption sheet may be prepared without pelletization. If the obtained absorption sheet is cut into a desired size and heat pressed, an absorption sheet is obtained whose absorption layer is wholly covered with the resin layer containing no inorganic particles.

The absorption sheet thus obtained is placed along with the power generating element in the laminate housing; if desired, an absorption sheet(s) is put also in a sealing portion of the housing; and the housing is sealed, for instance, by heat sealing such that a positive electrode terminal and a negative electrode terminal protrude out from the housing. Thus, a lithium secondary battery is attained.

The absorption sheet of the invention can be used also in an electric double layer capacitor beside in the lithium secondary battery.

### [Examples]

The present invention will be explained with reference to the following Examples. However, the present invention shall not be limited to the Examples.

### A: Case where the absorption sheet does not have a resin layer containing no inorganic particles:

### (1) Preparation of an absorption sheet

The resin and the inorganic particles in the amounts indicated in Table 1 were melt kneaded by a twin-screw extruder equipped with a quantitative feed (PCM-46 twin-screw extruder, ex Ikegai Co., Ltd.) and molded into a film with a thickness indicated in Table 1, using a T-die (ex Toshiba Machine Co., Ltd.). The film was stored in a dry room at a dew point of -50 degrees Celsius or lower.

### (2) Preparation 1 for a specimen (preparation of a specimen having an absorption sheet only inside the specimen)

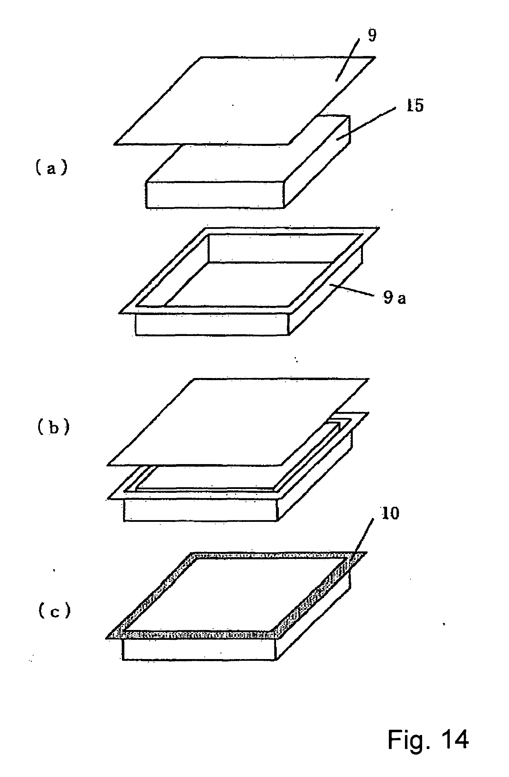

A specimen having a structure shown in Fig. 14 was prepared as follows. The following operations were carried out in a dry room at a dew point of -50 degrees Celsius or lower. First, a laminate housing material (aluminum laminate foil for lithium ion batteries, ex Showa Denko Packaging Co., Ltd., composed of an aluminum foil sandwiched by a nylon film and a polyolefin film) was drawn using a die with a concave section of width of 30 mm, length of 50 mm and a depth of 3.5 mm and a press machine (laminate film forming machine, ex Housen Co., Ltd.) at pressurization force of 5 MPs and pressurization speed of 1s/100 mm so that the sealant layer side (the side of the polyolefin film) was in a concave side. A separator (ex Cellguard Co., Ltd.) folded into dimensions of 28 mm wide and 48 mm long) and sandwiched by two absorption sheets (width of 28 mm, length of 48 mm) (17) was placed in the concave section of the drawn laminate housing material (9a). An undrawn laminate housing material (9) cut in a shape of width of 40 mm and length of 60 mm was laid on the aforementioned drawn laminate housing material (9a) were so that the sealant layers faced each other. Three sides of them was heat sealed with a sealed wide of 5 mm under the conditions of 200°C and 1MPa for 5 seconds to prepare a bag. Three milliliters of an electrolytic solution (ex Kishida Chemical Co., Ltd.) prepared by dissolving lithium hexafluorophosphate at 1 mol/L in a mixture of ethylene carbonate, dimethyl carbonate and diethyl carbonate at a volumetric ratio of 1: 1: 1 were poured via the open side to have the separator impregnated with the solution under a reduced pressure. Subsequently, the open side was heat sealed with a sealed wide of 5 mm under the condition of 200°C and 1MPa for 5 seconds to obtain a specimen.

### (3) Preparation 2 for a specimen (preparation of a specimen having absorption sheets inside the specimen and at the sealed portion)

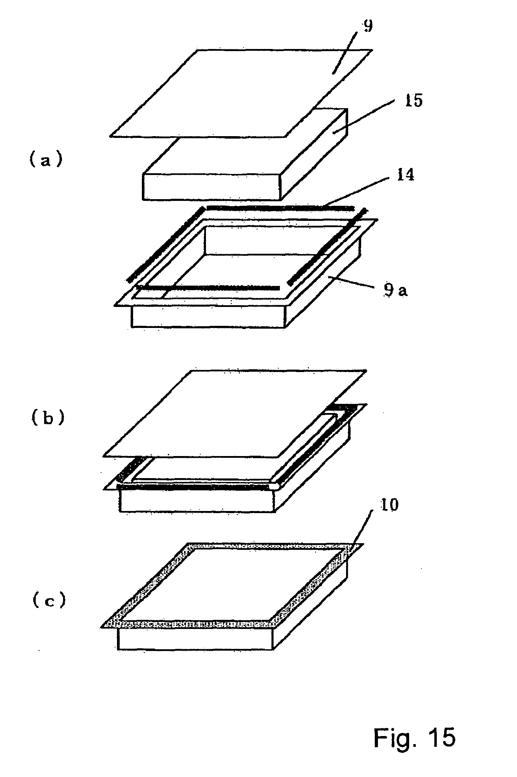

A specimen having a structure shown in Fig. 15 was prepared as follows. The following operations were carried out in a dry room at a dew point of -50 degrees Celsius or lower. First, a laminate housing material (aluminum laminate foil for lithium ion batteries, ex Showa Denko Packaging Co., Ltd., composed of an aluminum foil sandwiched by a nylon film and a polyolefin film) was drawn using a die with a concave section of width of 30 mm, length of 50 mm and a depth of 3.5 mm and a press machine (laminate film forming machine, ex Housen Co., Ltd.) at pressurization force of 5 MPs and pressurization speed of 1s/100 mm so that the sealant layer side (the side of the polyolefin film) was in a concave side. A separator (ex Cellguard Co., Ltd.) folded into dimensions of 28 mm wide and 48 mm long) and sandwiched by two absorption sheets (width of 28 mm, length of 48 mm) (17) was placed in the concave section of the drawn laminate housing material (9a). An undrawn laminate housing material (9) cut in a shape of width of 40 mm and length of 60 mm was laid on the aforementioned drawn laminate housing material (9a) were so that the sealant layers faced each other. Absorption sheets cut in a size of 5 mm wide and 55 mm long (14) were inserted between the laminate housing materials along any three sides. The three sides of them were heat sealed with a sealed wide of 5 mm under the conditions of 200°C and 1MPa for 5 seconds to prepare a bag. Three milliliters of an electrolytic solution (ex Kishida Chemical Co., Ltd.) prepared by dissolving lithium hexafluorophosphate at 1 mol/L in a mixture of ethylene carbonate, dimethyl carbonate and diethyl carbonate at a volumetric ratio of 1: 1: 1 were poured via the open side to have the separator impregnated with the solution under a reduced pressure. Subsequently, an absorption sheets of a size of 5 mm wide and 55 mm long (14) was inserted at the open side and the open side was heat sealed with a sealed wide of 5 mm under the condition of 200°C and 1MPa for 5 seconds to obtain a specimen.

### Example 1

According to the aforementioned preparation of an absorption sheet, an absorption sheet with a film thickness of 50 µm was obtained using 15 parts by weight of hydrotalcite (DHT- 4A , ex Kyowa Chemical Industry Co., Ltd.) as inorganic particles having an acid absorption function, 15 parts by weight of magnesium sulfate with no hydrating water (MG - 0K - 100, ex Ako Chemical Co., Ltd.) that had been sieved with an electromagnetic sieve shaker (AS200DIGIT, Azuwan Co., Ltd.) provided with a stainless steel sieve with an opening of 20 µm (Azuwan Co, Ltd.) as inorganic particles having a water absorption function, and 100 parts by weight of polypropylene (PP, Prime Polypro F - 744NP, ex Prime Polymer Co., Ltd.) as a resin. Using the obtained absorption sheet, a specimen was prepared according to Preparation 1 for a specimen.

### Example 2

A specimen was prepared as in Example 1 except that the amounts of hydrotalcite and magnesium sulfate were changed to 30 parts by weight, respectively.

### Example 3

A specimen was prepared as in Example 1 except that use was made of zeolite (Molecular sieve 4A powder, ex Tomoe Industry Co., Ltd.) as the inorganic particles having a water absorption function.

### Example 4

A specimen was prepared as in Example 1 except that use was made of 30 parts by weight of calcined hydrotalcite (DTH - 4C by Kyowa Chemical Industry Co., Ltd.) as both of the inorganic particles having an acid absorption function and the inorganic particles having a water absorption function.

### Example 5

A specimen was prepared as in Example 1 except that use was made of 30 parts by weight of hydrotalcite oxide (KW - 2200, ex Kyowa Chemical Industry Co., Ltd.) as both of the inorganic particles having an acid absorption function and the inorganic particles having a water absorption function.

### Example 6

A specimen was prepared as in Example 1 except that use was made of modified polypropylene (Admer QF551, ex Mitsui Chemical Co., Ltd.) as the resin.

### Example 7

A specimen was prepared as in Example 1 except that use was made of an ethylene-vinyl acetate copolymer (Evaflex P1007, ex Mitsui DuPont Chemical Co., Ltd.) as the resin.

### Example 8

A specimen was prepared as in Example 1 except that use was made of an ethylene-vinyl alcohol copolymer (Eval F101B, ex Kuraray Co., Ltd.) as the resin.

### Example 9

A specimen was prepared as in Example 1 except that use was made of low density polyethylene (LDPE, Neozex 0234CL, ex Prime Polymer Co., Ltd.) as the resin.

### Example 10

A specimen was prepared as in Example 1 except that use was made of polymethylpentene (TPX DX845, ex Mitsui Chemical Co., Ltd.) as the resin.

### Example 11

According to the aforementioned preparation of an absorption sheet, a hydrotalcite-dispersed polypropylene sheet with a film thickness of 25 µm was obtained using 30 parts by weight of hydrotalcite (DHT- 4A, ex Kyowa Chemical Industrial Co., Ltd.) as inorganic particles having an acid absorption function and 100 parts by weight of polypropylene (PP, Prime Polypro F - 744NP, ex Prime Polymer Co., Ltd.) as a resin. Also, according to the aforementioned preparation of an absorption sheet, a magnesium sulfate-dispersed polypropylene sheet with a film thickness of 25 µm was obtained using 30 parts by weight of magnesium sulfate with no hydrating water (MG - 0K - 100, ex Ako Chemical Co., Ltd.) that had been sieved with an electromagnetic sieve shaker (AS200DIGIT, ex Azuwan Co., Ltd.) provided with a stainless steel sieve with an opening of 20 µm (ex Azuwan Co, Ltd.) as inorganic particles having a water absorption function and 100 parts by weight of the aforementioned polypropylene as a resin. The two sheets obtained were heat laminated with each other using a laminator (FL750, ex Taisei Laminator Co., Ltd.) under the condition of 0.5MPa, 180°C and 1m/min to obtain an absorption sheet with a film thickness of 50 µm. Using this absorption sheet, a specimen was prepared according to Preparation 1 for a specimen.

### Example 12

Using the same absorption sheet as in Example 1, a specimen was prepared according to Preparation 2 for a specimen.

### Example 13

Using the same absorption sheet as in Example 2, a specimen was prepared according to Preparation 2 for a specimen.

### Example 14

Using the same absorption sheet as in Example 3, a specimen was prepared according to Preparation 2 for a specimen.

### Example 15

Using the same absorption sheet as in Example 4, a specimen was prepared according to Preparation 2 for a specimen.

### Example 16

Using the same absorption sheet as in Example 5, a specimen was prepared according to Preparation 2 for a specimen.

### Comparative Example 1

A specimen was prepared as in Example 1 except that neither inorganic particles having an acid absorption function nor inorganic particles having a water absorption function was used.

### Comparative Example 2

A specimen was prepared as in Example 1 except that no inorganic particles having an acid absorption function were mixed and 30 parts by weight of magnesium sulfate were used as the inorganic particles having a water absorption function.

### Comparative Example 3

A specimen was prepared as in Example 1 except that no inorganic particles having an water absorption function were mixed and 30 parts by weight of hydrotalcite were used as the inorganic particles having an acid absorption function.

### Comparative Example 4

A specimen was prepared according to Preparation 1 for a specimen, but without use of an absorption sheet

### Comparative Example 5

The side of the hydrotalcite-dispersed polypropylene sheet of the absorption sheet prepared in Example 11 was laminated on the sealant layer side of the aluminum laminate foil for a lithium ion battery, prepared in Preparation 1 for a specimen, using a laminator (FL750, ex Daisei Laminator Co., Ltd.) under the conditions of 0.5 MPa, 180°C and 1m/min to obtain an aluminum laminate foil having both acid and water absorption functions. A specimen was prepared according to Preparation 1 for a specimen except that the obtained aluminum laminate foil was used as a laminate housing material and no absorption sheet was used.

### Comparative Example 6

The absorption sheet prepared in Example 1 was heat laminated on the sealant layer side of the aluminum laminate foil for a lithium ion battery, prepared in the Preparation 1 specimen, using a laminator (FL750, ex Daisei Laminator Co., Ltd.) under the conditions of 0.5 MPa, 180°C and 1m/min to obtain an aluminum laminate foil having both acid and water absorption functions. A specimen was prepared according to Preparation 1 for a specimen except that the obtained aluminum laminate foil was used as a laminate housing material and no absorption sheet was used.

### Comparative Example 7

The hydrotalcite-dispersed polypropylene sheet and the magnesium sulfate-dispersed polypropylene sheet prepared in Example 11 were layered without heat lamination, and used as an absorption sheet in the preparation of a specimen according to Preparation 1 for a specimen.

### Comparative Example 8

A specimen was prepared as in Example 1 except that the amounts of hydrotalcite and magnesium sulfate were changed to 0.5 part by weight, respectively.

### Comparative Example 9

A specimen was prepared according to Preparation 2 for a specimen, using the same absorption sheet as in Example 1, but the absorption sheet was not provided inside the specimen and was provided only at the sealing portion.

**[Table 1 - 1]**

| Structure and the position of the absorption sheet | | | | | | |
|---|---|---|---|---|---|---|
| | Absorption Sheet | | | | Position of the absorption sheet | |
| | Material used | Amount, parts by weight | Film thickness, µm | | Inside the specimen | At the sealing portion |
| Example 1 | Polypropylene | 100 | 50 | | Arranged | - |
| | Hydrotalcite | 15 | | | | |
| | Magnesium sulfate | 15 | | | | |
| Example 2 | Polypropylene | 100 | 50 | | Arranged | - |
| | Hydrotalcite | 30 | | | | |
| | Magnesium sulfate | 30 | | | | |
| Example 3 | Polypropylene | 100 | 50 | | Arranged | - |
| | Hydrotalcite | 15 | | | | |
| | Zeolite | 15 | | | | |
| Example 4 | Polypropylene | 100 | 50 | | Arranged | - |
| | Calcined hydrotalcite | 30 | | | | |
| Example 5 | Polypropylene | 100 | 50 | | Arranged | - |
| | Hydrotalcite oxide | 30 | | | | |
| Example 6 | Modified polypropylene | 100 | 50 | | Arranged | - |
| | Hydrotalcite | 15 | | | | |
| | Magnesium sulfate | 15 | | | | |
| Example 7 | Ethylene-vinyl acetate copolymer | 100 | 50 | | Arranged | - |
| | Hydrotalcite | 15 | | | | |
| | Magnesium sulfate | 15 | | | | |
| Example 8 | Ethylene-vinyl alcohol copolymer | 100 | 50 | | Arranged | - |
| | Hydrotalcite | 15 | | | | |
| | Magnesium sulfate | 15 | | | | |
| Example 9 | Low density polyethylene | 100 | 50 | | Arranged | - |
| | Hydrotalcite | 15 | | | | |
| | Magnesium sulfate | 15 | | | | |
| Example 10 | Polymethylpentene | 100 | 50 | | Arranged | - |
| | Hydrotalcite | 15 | | | | |
| | Magnesium sulfate | 15 | | | | |
| Example 11 | Polypropylene | 100 | 25 | 50 | Arranged | - |
| | Hydrotalcite | 30 | | | | |
| | Polypropylene | 100 | 25 | | | |
| | Magnesium sulfate | 30 | | | | |

**[Table 1-2]**

| | Absorption Sheet | | | | Positions of the absorption sheet | |
|---|---|---|---|---|---|---|
| | Material used | Amount, parts by weight | Film thickness, µm | | Inside the specimen | At the sealing portion |
| Example 12 | Polypropylene | 100 | 50 | | Arranged | Arranged |
| | Hydrotalcite | 15 | | | | |
| | Magnesium sulfate | 15 | | | | |
| Example 13 | Polypropylene | 100 | 50 | | Arranged | Arranged |
| | Hydrotalcite | 30 | | | | |
| | Magnesium sulfate | 30 | | | | |
| Example 14 | Polypropylene | 100 | 50 | | Arranged | Arranged |
| | Hydrotalcite | 15 | | | | |
| | Zeolite | 15 | | | | |
| Example 15 | Polypropylene | 100 | 50 | | Arranged | Arranged |
| | Calcined hydrotalcite | 30 | | | | |
| Example 16 | Polypropylene | 100 | 50 | | Arranged | Arranged |
| | Hydrotalcite oxide | 30 | | | | |
| Comparative Example 1 | Polypropylene | 100 | 50 | | Arranged | - |
| Comparative Example 2 | Polypropylene | 100 | 50 | | Arranged | - |
| | Magnesium sulfate | 30 | | | | |
| Comparative Example 3 | Polypropylene | 100 | 50 | | Arranged | - |
| | Hydrotalcite | 30 | | | | |
| Comparative Example 4 | - | - | - | | - | - |
| Comparative Example 5 | Polypropylene | 100 | 25 | 50 | The absorption sheet was heat laminated on the laminate housing material. | |
| | Hydrotalcite | 30 | | | | |
| | Polypropylene | 100 | 25 | | | |
| | Magnesium sulfate | 30 | | | | |
| Comparative Example 6 | Polypropylene | 100 | 50 | | The absorption sheet was heat laminated on the laminate housing material. | |
| | Hydrotalcite | 15 | | | | |
| | Magnesium sulfate | 15 | | | | |
| Comparative Example 7 | Polypropylene | 100 | 25 | | Arranged | - |
| | Hydrotalcite | 30 | | | | |
| | Polypropylene | 100 | 25 | | | |
| | Magnesium sulfate | 30 | | | | |
| Comparative Example 8 | Polypropylene | 100 | 50 | | Arranged | - |
| | Hydrotalcite | 0.5 | | | | |
| | Magnesium sulfate | 0.5 | | | | |
| Comparative Example 9 | Polypropylene | 100 | 50 | | - | Arranged |
| | Hydrotalcite | 15 | | | | |
| | Magnesium sulfate | 15 | | | | |

### Reliability Test

The specimen prepared above was left standing in a thermohygrostat at 60°C, 95% RH
for 30 days, and its appearance was examined visually, and a hydrogen fluoride concentration and a moisture content in the electrolyte solution in the specimen were measured. The moisture content was measured by the Carl Fisher method and the
hydrogen fluoride content was measured by ion chromatography, as seen below. The test results are as seen in Tables 2 through 4.

### Measurement of the Moisture Content

The moisture content was measured with a Carl Fisher volumetric titration apparatus (AQV - 300, ex Hiranuma Sangyo Co., Ltd.) in a gas replacement type of a glove box (SG -1000, ex Azuwan Co., Ltd.) at a dew point of -50 degrees Celsius or lower that was replaced with argon gas.

### Measurement of the Hydrogen Fluoride Content

Lithium hexafluorophosphate (LiPF₆) in a state of salt used as the electrolyte is labile in the presence of moisture, so that it reacts with water to generate hydrogen fluoride. However, hexafluorophosphate anions (PF₆⁻ after dissociated do not react with water. Taking advantage of the fact that lithium hexafluorophosphate (LiPF₆) is stable in an aqueous dilute solution, 1 ml of the electrolyte solution was diluted with pure water from which impurities had been removed by a pure water manufacturing apparatus (E1ix-UV3, ex Nippon Millipore Co., Ltd.) to a volume of 100 ml, and a hydrogen fluoride concentration was determined by a suppressor type ion chromatography (IC-2001, ex Toso Co., Ltd.) provided with an anionic organic acid analysis column (Super IC-AZ, ex Toso Co., Ltd.), using an aqueous solution of 2.0 mmol/L of NaHCO₃ and 3.0 mmol/L of Na₂CO₃ as an eluent at a flow rate of 1.5 ml/min.

**[Table 2]**

| Results of the Reliability Test | | | | | | | | | | |
|---|---|---|---|---|---|---|---|---|---|---|
| Assessment Item | | Example 1 | Example 2 | Example 3 | Example | Example 5 | Example 6 | Example 7 | Example 8 | Example 9 |
| Appearance | | No changes | No changes | No changes | No changes | No changes | No changes | No changes | No changes | No changes |
| Hydrogen fluoride concentration, ppm | Initial | 30 | 30 | 30 | 30 | 30 | 30 | 30 | 30 | 30 |
| | After the test | 20 | 20 | 20 | 20 | 20 | 20 | 20 | 20 | 20 |
| Moisture content, ppm | Initial | 40 | 40 | 40 | 40 | 40 | 40 | 40 | 40 | 40 |
| | After the test | 20 | 20 | 30 | 20 | 20 | 20 | 20 | 20 | 20 |

**[Table 3]**

| Results of the Reliability Test | | | | | | | | | | | |
|---|---|---|---|---|---|---|---|---|---|---|---|
| Assessment Item | | Example 10 | Example 11 | Comparative Example 1 | Comparative Example 2 | Comparative Example 3 | Comparative Example 4 | Comparative Example 5 | Comparative Example 6 | Comparative Example 7 | Comparative Example 8 |
| Appearance | | No changes | No changes | Liquid leakage | Swelled | Liquid leakage | Liquid leakage | Liquidleakage | Liquid leakage | No changes | Liquid leakage |
| Hydrogen fluoride concentration, ppm | Initial | 30 | 30 | 30 | 30 | 30 | 30 | 30 | 30 | 30 | 30 |
| | After the test | 20 | 20 | 250 | 80 | 150 | 270 | 270 | 260 | 40 | 240 |
| Moisture content. ppm | Initial | 40 | 40 | 40 | 40 | 40 | 40 | 40 | 40 | 40 | 40 |
| | After the test | 20 | 20 | 500 | 60 | 450 | 480 | 500 | 490 | 40 | 470 |

**[Table 4]**

| Results of the Reliability Test | | | | | | | |
|---|---|---|---|---|---|---|---|
| Assessment Item | | Example 12 | Example 13 | Example 14 | Example 15 | Example 16 | Comparative Example 9 |
| Appearance | | No changes | No changes | No changes | No changes | No changes | Swelled |
| Hydrogen fluoride | Initial | 30 | 30 | 30 | 30 | 30 | 30 |
| concentration, After ppm | the test | 10 | 10 | 20 | 10 | 10 | 60 |
| Moisture content. ppm | Initial | 40 | 40 | 40 | 40 | 40 | 40 |
| | After the test | 10 | 10 | 20 | 10 | 10 | 60 |

As seen in Tables 2 and 3, in Examples 1 through 11 where the absorption sheet was provided inside of the specimen, no change was found in appearance. The hydrogen fluoride concentration and the moisture content decreased from the initial values. Further, as seen in Table 8, in Examples 32 through 37 where the absorption sheet was provided also at the sealed portion, further reduction in the hydrogen fluoride concentration and the moisture content were confirmed. The results indicate that the absorption sheet of the present invention provided in the inside of a housing made of a laminate housing material is effective in improving the properties of the battery. Therefore, a lithium secondary battery with excellent durability and safety is provided.

In contrast, in Comparative Examples 1 and 4, where no absorption sheet was provided inside the specimen, liquid leakage occurred due to the occurrence of corrosion of the aluminum foil in the housing material and detachment in the sealed portion. In Comparative Example 2 where no inorganic particles having an acid absorption function were added, the effect of depressing the increase in the moisture content was seen, but swelling was found in observation of the appearance. It is surmised that the moisture penetrated from the outside the specimen and, before absorbed by the absorption sheet, reacted with lithium hexafluorophosphate as an electrolyte to generate hydrogen fluoride which then caused the swelling. In Comparative Example 3 where the inorganic particles having a water absorption function were not added, the effect of depressing an increase in the hydrogen fluoride concentration was seen, compared to Comparative Examples 1 and 4, but liquid leakage occurred due to the occurrence of corrosion in the aluminum foil and peeling of the sealing portion.

In Comparative Examples 5 and 6 where the absorption sheet was attached on the sealant layer side of the laminate housing material instead of being provided inside the specimen, corrosion in the aluminum foil and liquid leakage from the sealed portion were seen. This is probably because the aluminum foil in the laminate housing material and the interface between the aluminum foil and the resin layer thereon were damaged, in the drawing process, by the magnesium sulfate particles and the hydrotalcite particles contained in the absorption sheet attached to the laminate housing material.

In Comparative Example 7 where the hydrotalcite-dispersed polypropylene sheet and the magnesium sulfate-dispersed polypropylene sheet were used without being bonded to each other, no liquid leakage was seen, but the hydrogen fluoride concentration and moisture content were equal to or slightly higher than the initial values. In Example 11 where the absorption sheet in which the hydrotalcite-dispersed polypropylene sheet and the magnesium sulfate-dispersed polypropylene sheet were bonded to each other, the hydrogen fluoride concentration and the moisture content were lower than the initial values. This is probably because diffusion efficiency of hydrogen fluoride and moisture into the absorption sheet was improved by having both the acid absorption function and the water absorption function in one and the same sheet. From these results, it is seen that the efficiency of the acid and water absorption is improved by using the absorption sheet having both the acid absorption function and the water absorption function in one and the same sheet, which is effective in improving the battery properties.

Comparative Example 8 is a case where the amounts of the inorganic particles having an acid absorption function and the inorganic particles having a water absorption function in the absorption layer are less than the ranges of those in the present invention. The absorption functions are insufficient and, therefore, liquid leakage occurred.

In Examples 12 through 16, the absorption sheet was provided also at the sealing section of the laminate housing. As seen in Examples 12 through 16 in Table 4, the effect of reducing the hydrogen fluoride concentration and the moisture content was better than that in Examples 1 through 11 where the absorption sheet was provided only in the specimen.

In contrast, in Comparative Example 9 where the absorption sheet was provided only at the sealing portion of the housing, a little effect of suppressing increase in the hydrogen fluoride concentration and the moisture content was seen, but swelling was seen in observation of the appearance. This is probably because of hydrogen fluoride generated due to the presence of initial moisture and moisture in a trace amount penetrated via the absorption sheet, though the moisture penetrated from the outside and the hydrogen fluoride generated inside were absorbed at the sealed portion.

### B. Case where the absorption sheet has a resin layer containing no inorganic particles

### (1) Preparation 1 of an absorption sheet

The material for the absorption layer shown in Table 5 in the amounts indicated in Table 5 were melt kneaded by a twin-screw extruder equipped with a quantitative feed (PCM-46 twin-screw extruder, ex Ikegai Co., Ltd.) and molded into pellets using a cold-cut type pelletizer. The pellets were stored in a dry room at a dew point of- 50 degrees Celsius or lower. The pellets were fed to a single screw extruder (FS40, ex Ikegai Co., Ltd.) and the resin for the resin layer containing no inorganic particles seen in Table 5 were fed to two units of the single screw extruder (FS30, ex Ikegai Co., Ltd.). Using a triple-layer T die (ex Toshiba Machine Co., Ltd.) in a multi-manifold system to which the three units of the extruders were connected, a co-extruded film having a structure composed of a resin layer containing no inorganic particles/an absorption layer/a resin layer containing no inorganic particles was obtained with a film thickness shown in Table 5. The obtained co-extruded film was stored in a dry room at a dew point of -50 degrees Celsius or lower. The co-extruded film was cut into a width of 60 mm and a length of 110 mm in the dry room at a dew point of -50 degrees Celsius or lower to obtain an absorption sheet having resin layers containing no inorganic particles on both sides of the absorption layer.

### (2) Preparation 2 of an absorption sheet

The material for the absorption layer shown in Table 5 in the amounts indicated in Table 5 were melt kneaded by a twin-screw extruder equipped with a quantitative feed (PCM-46 twin-screw extruder, ex Ikegai Co., Ltd.) and molded into pellets using a cold-cut type pelletizer. The pellets were stored in a dry room at a dew point of- 50 degrees Celsius or lower. The pellets were fed to a single screw extruder (FS40, ex Ikegai Co., Ltd.) and the resin for the resin layer containing no inorganic particles seen in Table 5 were fed to two units of the single screw extruder (FS30, ex Ikegai Co., Ltd.). Using a triple-layer T die (ex Toshiba Machine Co., Ltd.) in a multi-manifold system to which the three units of the extruders were connected, a co-extruded film having a structure composed of a resin layer containing no inorganic particles/an absorption layer/a resin layer containing no inorganic particles was obtained with a film thickness shown in Table 5. The obtained co-extruded film was stored in a dry room at a dew point of -50 degrees Celsius or lower. The co-extruded film was cut into a width of 60 mm and a length of 110 mm in the dry room at a dew point of -50 degrees Celsius or lower. The film was heat compressed at 120°C, 0.5 MPa for 1 min. to obtain an absorption sheet where the absorption layer was encapsulated in the resin layer containing no inorganic particles, as shown in Fig. 6.

### (3) Preparation 1 for a specimen (preparation of a specimen having an absorption sheet only inside the specimen)

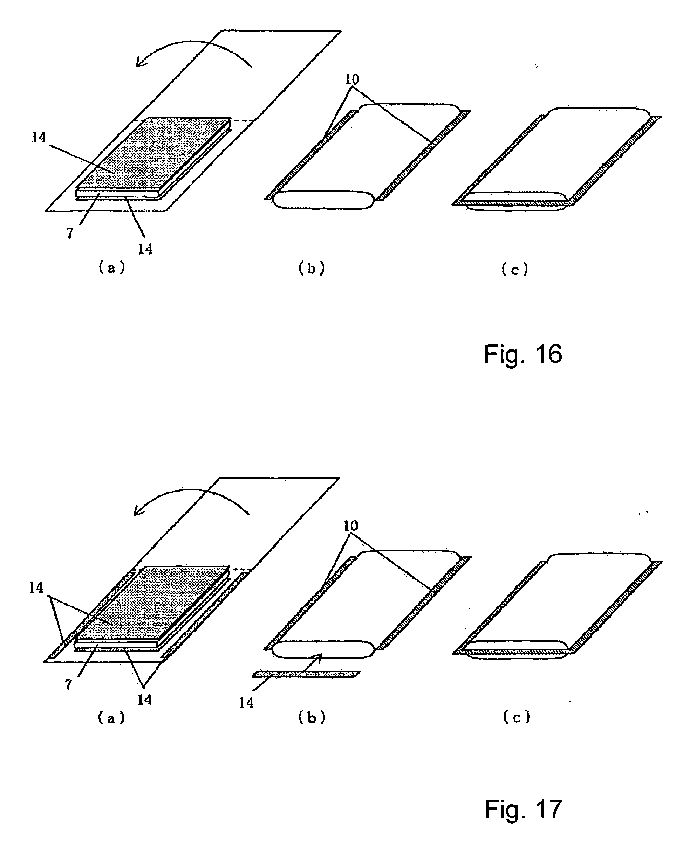

A specimen having a structure shown in Fig. 16 was prepared as follows. The following operations were carried out in a dry room at a dew point of -50 degrees Celsius or lower. First, an aluminum laminate foil for a lithium ion battery (aluminum laminate foil for lithium ion batteries, ex Showa Denko Packaging Co., Ltd., composed of an aluminum foil sandwiched by a nylon film and a polyolefin film) was cut into a width of 75 mm and a length of 250 mm, and folded in two with the two short sides being contacted so that the sealant layer (polyolefin film layer) was inside. As shown in Fig. 16 (b), the other two sides, 10, were heat sealed with a sealed width of 5 mm at 200°C for 5 seconds to form a bag having an open portion at the short sides. A separator (ex Cell Guard Co., Ltd.) folded into dimensions of a width of 110 mm and a length of 60 mm was sandwiched by the two absorption sheets (14), which was then inserted in to the bag via the open portion. Twenty five milliliters of an electrolytic solution (ex Kishida Chemical Co., Ltd.) prepared by dissolving lithium hexafluorophosphate at 1 mol/L in a mixture of ethylene carbonate, dimethyl carbonate and diethyl carbonate at a volumetric ratio of 1: 1: 1 were poured via the open side to have the separator impregnated with the solution under a reduced pressure. Subsequently, the open side was heat sealed with a sealed wide of 10 mm under the condition of 200°C for 5 seconds to obtain a specimen.

### (4) Preparation 2 for a specimen (preparation of a specimen having an absorption sheet inside the specimen and at the sealed portion)

A specimen having a structure shown in Fig. 17 was prepared as follows. The following operations were carried out in a dry room at a dew point of -50 degrees Celsius or lower. First, an aluminum laminate foil for a lithium ion battery (aluminum laminate foil for lithium ion batteries, ex Showa Denko Packaging Co., Ltd., composed of an aluminum foil sandwiched by a nylon film and a polyolefin film) was cut into a width of 75 mm and a length of 250 mm, and folded in two with the two short sides being contacted so that the sealant layer (polyolefin film layer) was inside. Absorption sheets cut in a size of 5 mm wide and 120 mm long (14) were inserted between the laminate housing materials along the other two sides. The aforesaid two sides, 10, were heat sealed with a sealed width of 5 mm at 200°C for 5 seconds to form a bag having an open portion at the short sides. A separator (ex Cell Guard Co., Ltd.) folded into dimensions of a width of 110 mm and a length of 60 mm was sandwiched by the two absorption sheets (14), which was then inserted in to the bag via the open portion. Twenty five milliliters of an electrolytic solution (ex Kishida Chemical Co., Ltd.) prepared by dissolving lithium hexafluorophosphate at 1 mol/L in a mixture of ethylene carbonate, dimethyl carbonate and diethyl carbonate at a volumetric ratio of 1: 1: 1 were poured via the open side to have the separator impregnated with the solution under a reduced pressure. Subsequently, an absorption sheets of a size of 10 mm wide and 60 mm long (14) was inserted at the open side and the open side was heat sealed with a sealed wide of 10 mm under the condition of 200°C for 5 seconds to obtain a specimen.

### Example 17

An absorption sheet was prepared according to Preparation 1 for an absorption sheet. In an absorption layer, hydrotalcite (DHT- 4A, ex Kyowa Chemical Industrial Co., Ltd.) (15 parts by weight) was used as the inorganic particles having an acid absorption function; magnesium sulfate (MG - 0K - 100, ex Ako Chemical Co., Ltd.) (15 parts by weight) that was sieved with an electromagnetic sieve shaker (AS200DIGIT, ex Azuwan Co., Ltd.) with a stainless steel sieve with an opening of 20 µm (Azuwan Co, Ltd.) was used as the inorganic particles having a water absorption function; and polypropylene (PP, Prime Polypro F - 744NP, ex Prime Polymer Co., Ltd.) (100 parts by weight) was used as the resin. Low density polyethylene (LDPE, Neozex 0234CL, ex Prime Polymer Co., Ltd.) was used as the resin for a resin layer containing no inorganic particles. A specimen was prepared according to Preparation 1, using the absorption sheet composed of 10 µm of the resin layer containing no inorganic particles /50 µm of the absorption layer /10 µm of the resin layer containing no inorganic particles.

### Example 18

A specimen was prepared as in Example 17 except that the amounts of hydrotalcite and magnesium sulfate were changed to 30 parts by weight respectively.

### Example 19

A specimen was prepared as in Example 17 except that use was made of zeolite (Molecular sieve 4A Powder, ex Tomoe Industry Co., Ltd.) as the inorganic particles having a water absorption function.

### Example 20

A specimen was prepared as in Example 17 except that use was made of 30 parts by weight of calcined hydrotalcite (DTH - 4C by Kyowa Chemical Industry Co., Ltd.) as both of the inorganic particles having an acid absorption function and the inorganic particles having a water absorption function.

### Example 21

A specimen was prepared as in Example 17 except that use was made of 30 parts by weight of hydrotalcite oxide (KW - 2200, ex Kyowa Chemical Industry Co., Ltd.) as both of the inorganic particles having an acid absorption function and the inorganic particles having a water absorption function.

### Example 22

A specimen was prepared as in Example 17 except that use was made of modified polypropylene (Admer QF551, ex Mitsui Chemical Co., Ltd.) as the resin in the absorption layer.

### Example 23

A specimen was prepared as in Example 17 except that use was made of an ethylene-vinyl acetate copolymer (Evaflex P1007, ex Mitsui DuPont Chemical Co., Ltd.) as the resin in the absorption layer.

### Example 24

A specimen was prepared as in Example 17 except that use was made of an ethylene-vinyl alcohol copolymer (Eval F101B, ex Kuraray Co., Ltd.) as the resin in the absorption layer.

### Example 25

A specimen was prepared as in Example 17 except that use was made of low density polyethylene (LDPE, Neozex 0234CL, ex Prime Polymer Co., Ltd.) as the resin in the absorption layer.

### Example 26

A specimen was prepared as in Example 17 except that use was made of polymethylpentene (TPX DX845, ex Mitsui Chemical Co., Ltd.) as the resin in the absorption layer.

### Example 27

A specimen was prepared as in Example 17 except that use was made of modified polypropylene (Admer QF551, ex Mitsui Chemical Co., Ltd.) as the resin for the resin layer containing no inorganic particles.

### Example 28

A specimen was prepared as in Example 17 except that use was made of an ethylene-vinyl acetate copolymer (Evaflex P1007, ex Mitsui DuPont Chemical Co., Ltd.) as the resin for the resin layer containing no inorganic particles.

### Example 29

A specimen was prepared as in Example 17 except that use was made of an ethylene-vinyl alcohol copolymer (Eval F101B, ex Kuraray Co., Ltd.) as the resin for the resin layer containing no inorganic particles.

### Example 30

A specimen was prepared as in Example 17 except that use was made of polypropylene (PP, Prime Polypro F-744NP, ex Prime Polymer Co. Ltd.) as the resin for the resin layer containing no inorganic particles.

### Example 31

A specimen was prepared as in Example 17 except that use was made of polymethylpentene (TPX DX845, ex Mitsui Chemical Co., Ltd.) as the resin for the resin layer containing no inorganic particles.

### Example 32

Using the same absorption sheet as in Example 17, a specimen was prepared according to Preparation 2 for a specimen.

### Example 33

Using the same absorption sheet as in Example 18, a specimen was prepared according to Preparation 2 for a specimen.

### Example 34

Using the same absorption sheet as in Example 19, a specimen was prepared according to Preparation 2 for a specimen.

### Example 35

Using the same absorption sheet as in Example 20, a specimen was prepared according to Preparation 2 for a specimen.

### Example 36

Using the same absorption sheet as in Example 21, a specimen was prepared according to Preparation 2 for a specimen.

### Example 37

Using the same materials as in Example 17, an absorption sheet was prepared according to Preparation 2 for an absorption sheet, and a specimen was prepared according to Preparation 2 for a specimen.

### Example 38

After leaving the absorption sheet prepared in Example 17 standing under an environment of 25°C, 60% RH for 1 week, a specimen was prepared according to Preparation 2 for a specimen.

### Comparative Example 10

A specimen was prepared as in Example 17 except that neither inorganic particles having an acid absorption function nor inorganic particles having a water absorption function was used.

### Comparative Example 11

A specimen was prepared as in Example 17 except that no inorganic particles having an acid absorption function were mixed and 30 parts by weight of magnesium sulfate were used as the inorganic particles having a water absorption function.

### Comparative Example 12

A specimen was prepared as in Example 17 except that no inorganic particles having an water absorption function were mixed and 30 parts by weight of hydrotalcite were used as the inorganic particles having an acid absorption function.

### Comparative Example 13

A specimen was prepared according to Preparation 1 for a specimen, but without use of an absorption sheet.

### Comparative Example 14

A specimen was prepared as in Example 17 except that the absorption sheet has no resin layer containing no inorganic particles.

### Comparative Example 15

A specimen was prepared according to Preparation 2 for a specimen, using the same absorption sheet as in Example 17, but the absorption sheet was not provided inside the specimen and was provided only at the sealing portion.

### Comparative Example 16

After leaving the absorption sheet prepared in Comparative Example 14 standing under an environment of 25°C, 60% RH for 1 week, a specimen was prepared according to Preparation 2 for a specimen.

**[Table 5 - 1]**

| Structure and position of the absorption sheet | | | | | | | |
|---|---|---|---|---|---|---|---|
| | Resin layer containing no inorganic particles | | Absorption Sheet | | | Positions of the absorption sheet | |
| | Resin | Thickness µm | Material used | Amount, parts by weight | Film thickness, µm | Inside the specimen | At the sealing portion |
| Example 17 | LDPE | 10 | PP | 100 | 50 | Arranged | - |
| | | | Hydrotalcite | 15 | | | |
| | | | Magnesium sulfate | 15 | | | |
| Example 18 | LDPE | 10 | PP | 100 | 50 | Arranged | - |
| | | | Hydrotalcite | 30 | | | |
| | | | Magnesium sulfate | 30 | | | |
| Example 19 | LDPE | 10 | PP | 100 | 50 | Arranged | - |
| | | | Hydrotalcite | 15 | | | |
| | | | Zeolite | 15 | | | |
| Example 20 | LDPE | 10 | PP | 100 | 50 | Arranged | - |
| | | | Calcined hydrotalcite | 30 | | | |
| Example 21 | LDPE | 10 | PP | 100 | 50 | Arranged | - |
| | | | Hydrotalcite oxide | 30 | | | |
| Example 22 | LDPE | 10 | Modified polypropylene | 100 | 50 | Arranged | - |
| | | | Hydrotalcite | 15 | | | |
| | | | Magnesium sulfate | 15 | | | |
| Example 23 | LDPE | 10 | Ethylene-vinyl acetate copolymer | 100 | 50 | Arranged | - |
| | | | Hydrotalcite | 15 | | | |
| | | | Magnesium sulfate | 15 | | | |
| Example 24 | LDPE | 10 | Ethylene-vinyl alcohol copolymer | 100 | 50 | Arranged | - |
| | | | Hydrotalcite | 15 | | | |
| | | | Magnesium sulfate | 15 | | | |
| Example 25 | LDPE | 10 | LDPE | 100 | 50 | Arranged | - |
| | | | Hydrotalcite | 15 | | | |
| | | | Magnesium sulfate | 15 | | | |
| Example 26 | LDPE | 10 | Polymethylpentene | 100 | 50 | Arranged | - |
| | | | Hydrotalcite | 15 | | | |
| | | | Magnesium sulfate | 15 | | | |
| Example 27 | Modified polypropylene | 10 | PP | 100 | 50 | Arranged | - |
| | | | Hydrotalcite | 15 | | | |
| | | | Magnesium sulfate | 15 | | | |
| Example 28 | Ethylene-vinyl acetate copolymer | 10 | PP | 100 | 50 | Arranged | - |
| | | | Hydrotalcite | 15 | | | |
| | | | Magnesium sulfate | 15 | | | |

**[Table 5 - 2]**

| | | | | | | | |
|---|---|---|---|---|---|---|---|
| Example 29 | Ethylene-vinyl alcohol copolymer | 10 | PP | 100 | 50 | Arranged | - |
| | | | Hydrotalcite | 15 | | | |
| | | | Magnesium sulfate | 15 | | | |
| Example 30 | PP | 10 | PP | 100 | 50 | Arranged | - |
| | | | Hydrotalcite | 15 | | | |
| | | | Magnesium sulfate | 15 | | | |
| Example 31 | Polymethyl pentene | 10 | PP | 100 | 50 | Arranged | - |
| | | | Hydrotalcite | 15 | | | |
| | | | Magnesium sulfate | 15 | | | |
| Example 32 | LDPE | 10 | PP | 100 | 50 | Arranged | Arranged |
| | | | Hydrotalcite | 15 | | | |
| | | | Magnesium sulfate | 15 | | | |
| Example 33 | LDPE | 10 | PP | 100 | 50 | Arranged | Arranged |
| | | | Hydrotalcite | 30 | | | |
| | | | Magnesium sulfate | 30 | | | |
| Example 34 | LDPE | 10 | PP | 100 | 50 | Arranged | Arranged |
| | | | Hydrotalcite | 15 | | | |
| | | | Zeolite | 15 | | | |
| Example 35 | LDPE | 10 | PP | 100 | 50 | Arranged | Arranged |
| | | | Calcined hydrotalcite | 30 | | | |
| Example 36 | LDPE | 10 | PP | 100 | 50 | Arranged | Arranged |
| | | | Hydrotalcite oxide | 30 | | | |
| Example 37 | LDPE | 1 0 | PP | 100 | 50 | Arranged | Arranged |
| | | | Hydrotalcite | 15 | | | |
| | | | Magnesium sulfate | 15 | | | |
| Comparative Example 10 | LDPE | 10 | PP | 100 | 50 | Arranged | - |
| Comparative Example 11 | LDPE | 10 | PP | 100 | 50 | Arranged | - |
| | | | Magnesium sulfate | 30 | | | |
| Comparative Example 12 | LDPE | 10 | PP | 100 | 50 | Arranged | - |
| | | | Hydrotalcite | 30 | | | |
| Comparative Example 13 | None | None | None | None | None | - | - |
| Comparative Example 14 | - | - | PP | 100 | 50 | Arranged | - |
| | | | Hydrotalcite | 15 | | | |
| | | | Magnesium sulfate | 15 | | | |
| Comparative Example 15 | LDPE | 10 | PP | 100 | 50 | - | Arranged |
| | | | Hydrotalcite | 15 | | | |
| | | | Magnesium sulfate | 15 | | | |

### Reliability Test 1

The specimen prepared above was left standing in a thermohygrostat at 60°C, 95% RH for 30 days, and its appearance was examined visually, and a hydrogen fluoride concentration and a moisture content in the electrolyte solution in the specimen were measured. The moisture content was measured by the Carl Fisher method and the hydrogen fluoride content was measured by ion chromatography, as seen below. The test results are as seen in Tables 6 through 8.

### Measurement of the Moisture Content

The moisture content was measured with a Carl Fisher volumetric titration apparatus (AQV - 300, ex Hiranuma Sangyo Co., Ltd.) in a gas replacement type of a glove box (SG -1000, ex Azuwan Co., Ltd.) at a dew point of -50 degrees Celsius or lower that was replaced with argon gas.

### Measurement of the Hydrogen Fluoride Content

Lithium hexafluorophosphate (LiPF₆) in a state of salt used as the electrolyte is labile in the presence of moisture, so that it reacts with water to generate hydrogen fluoride. However, hexafluorophosphate anions (PF₆⁻) after dissociated do not react with water. Taking advantage of the fact that lithium hexafluorophosphate (LiPF₆) is stable in an aqueous dilute solution, 1 ml of the electrolyte solution was diluted with pure water from which impurities had been removed by a pure water manufacturing apparatus (Elix-UV3, ex Nippon Millipore Co., Ltd.) to a volume of 100 ml, and a hydrogen fluoride concentration was determined by a suppressor type ion chromatography (IC-2001, ex Toso Co., Ltd.) provided with an anionic organic acid analysis column (Super IC-AZ, ex Toso Co., Ltd.), using an aqueous solution of 2.0 mmol/L of NaHCO₃ and 3.0 mmol/L of Na₂CO₃ as an eluent at a flow rate of 1.5 ml/min.

**[Table 6]**

| Results of the Reliability Test | | | | | | | | | | | |
|---|---|---|---|---|---|---|---|---|---|---|---|
| Assessment Item | | Example 17 | Example 18 | Example 19 | Example 20 | Example 21 | Example 22 | Example 23 | Example 24 | Example 25 | Example 26 |
| Appearance | | No changes | No changes | No changes | No changes | No changes | No changes | No changes | No changes | No changes | No changes |
| Hydrogen fluoride concentration, ppm | Initial | 30 | 30 | 30 | 30 | 30 | 30 | 30 | 30 | 30 | 30 |
| | After the test | 20 | 20 | 20 | 20 | 20 | 20 | 20 | 20 | 20 | 20 |
| Moisture content, ppm | Initial | 40 | 40 | 40 | 40 | 40 | 40 | 40 | 40 | 40 | 40 |
| | After the test | 20 | 20 | 20 | 20 | 20 | 20 | 20 | 20 | 20 | 20 |

**[Table 7]**

| Results of the Reliability Test 1 | | | | | | | | | | | |
|---|---|---|---|---|---|---|---|---|---|---|---|
| Assessment Item | | Example 27 | Example 28 | Example 29 | Example 30 | Example 31 | Comparative Example 10 | Comparative Example 11 | Comparative Example 12 | Comparative Example 13 | Comparative Example 14 |
| Appearance | | No changes | No changes | No changes | No changes | No changes | Liquid leakag | Swelled | Liquid leakag | Liquid leakag | No changes |
| Hydrogen fluoride concentration, ppm | Initial | 30 | 30 | 30 | 30 | 30 | 30 | 30 | 30 | 30 | 30 |
| | After the test | 20 | 20 | 20 | 20 | 20 | 250 | 60 | 150 | 270 | 20 |
| Moisture content, ppm | Initial | 40 | 40 | 40 | 40 | 40 | 40 | 40 | 40 | 40 | 40 |
| | After the test | 20 | 20 | 20 | 20 | 20 | 500 | 30 | 450 | 180 | 20 |

**[Table 8]**

| Results of the Reliability Test 1 | | | | | | | | |
|---|---|---|---|---|---|---|---|---|
| Assessment Item | | Example 32 | Example 33 | Example 34 | Example 35 | Example 36 | Example 37 | Comparative Example 15 |
| Appearance | | No changes | No changes | No changes | No changes | No changes | No changes | Swelled |
| Hydrogen fluoride concentration, ppm | Initial | 30 | 30 | 30 | 30 | 30 | 30 | 30 |
| | After the test | 10 | 10 | 20 | 10 | 10 | 10 | 60 |
| Moisture content, ppm | Initial | 40 | 40 | 40 | 40 | 40 | 40 | 40 |
| | After the test | 10 | 10 | 10 | 10 | 10 | 10 | 60 |

As seen in Tables 6 and 7, in Examples 17 through 31 where the absorption sheet was provided inside of the specimen, no change was found in appearance. The hydrogen fluoride concentration and the moisture content decreased from the initial values. The results indicate that the absorption sheet of the present invention provided in the inside (and, preferably, also at the sealed portion) of a housing made of a laminate housing material is effective in improving the properties of the battery. Therefore, a lithium secondary battery with excellent durability and safety is provided.

In contrast, in Comparative Examples 10 and 13, where no absorption sheet was provided inside the specimen, liquid leakage occurred due to the occurrence of corrosion of the aluminum in the housing material and detachment in the sealed portion. In Comparative Example 11 where no inorganic particles having an acid absorption function were added, the effect of depressing the increase in the moisture content was seen, but swelling was found in observation of the appearance. It is surmised that the moisture penetrated from the outside the specimen and, before absorbed by the absorption sheet, reacted with lithium hexafluorophosphate as an electrolyte to generate hydrogen fluoride which then caused the swelling. In Comparative Example 12 where the inorganic particles having a water absorption function were not added, an increase in the hydrogen fluoride concentration was detected to be depressed when compared to Comparative Examples 10 and 13, but liquid leakage occurred due to the occurrence of corrosion in the aluminum foil and peeling of the sealing portion. Further, in Comparative Example 15 where the absorption sheet was provided only at the sealed portion of the housing, the effect of depressing the increase in the hydrogen fluoride concentration and the moisture content was seen, compared to Comparative Examples 10 and 13, but swelling was found in observation of the appearance. It is surmised that this was caused by hydrogen fluoride generated by an initial water content and a trace amount of water penetrated via the absorption sheet, though the effect of absorbing, at the sealed portion, water penetrated from the outside and hydrogen fluoride generated inside was attained. In Comparative Example 14, since the absorption sheet was prepared in a dry room at a dew point of -50 degrees Celsius or lower as in Example 17, the appearance, the hydrogen fluoride concentration and the moisture content were same as those in Example 17. However, after the absorption sheet prepared in Comparative Example 14 was left standing under hygroscopic environment at 25°C, 60% RH for 1 week, the reliability test (Comparative Example 16) gave the results that swelling was found in observation of the appearance and both the hydrogen fluoride concentration and the moisture content increased, as will be explained below.

### (2) Reliability Test 2

In order to evaluate handling properties of the absorption sheet, the prepared absorption sheet was left standing at 25°C, 60% RH for 1 week, and a specimen was prepared as in Example 38 and Comparative Example 16,and tested as in Reliability Test 1. The test results are as seen in Table 9.

**[Table 9]**

| Results of Reliability Test 2 | | | |
|---|---|---|---|
| Assessment Item | | Example 38 | Comparative Example 16 |
| Appearance | | No changes | Swelled |
| Hydrogen fluoride concentration, ppm | Initial | 30 | 30 |
| | After the test | 10 | 60 |
| Moisture content, ppm | Initial | 40 | 40 |
| | After the test | 10 | 60 |

As seen in Table 9, in Example 38 where the absorption sheet had a resin layer containing no inorganic particles, the hydrogen fluoride concentration and the moisture content decreased from the initial values, though the sheet was left in a hygroscopic condition, which results are similar with those in Reliability Test 1. In contrast, in Comparative Example 16 where the absorption sheet did not have a resin layer containing no inorganic particles, swelling was found in the appearance, and the hydrogen fluoride concentration and the moisture content increased, which results indicate that the absorption sheet of the present invention is effective in reducing the influence of moisture in the sheet manufacturing environment and in the battery production environment. Therefore, a lithium secondary battery with excellent productivity can be provided.

### (3) SEM observation

In order to examine whether the inorganic particles detach from the absorption sheet or not, a cut end face of the absorption sheets prepared in Examples 17 and 37 and Comparative Example 14 was observed by an SEM.

In Comparative Example 14 where the absorption sheet did not have a resin layer containing no inorganic particles, breaks generated on the cut end face of the absorption sheet and, further, the particles were found which are surmised to have detached from the end face. In contrast, such breaks or particles were not observed in Examples 17 and 37. The results indicate that the absorption sheet of the present invention having a resin layer containing no inorganic particles does not cause a falling substance which may contaminate the battery. Therefore, a lithium secondary battery with excellent safety and durability can be provided.

### [Brief Description on the Drawings]

[Fig. 1] A cross-sectional view showing an example of a positive (or negative) electrode plate in the lithium secondary battery according to the present invention
[Fig. 2] A cross-sectional view showing an example of the power generating element of the lithium secondary battery according to the present invention
[Fig. 3] A plane view showing an example of the lithium secondary battery according to the present invention
[Fig. 4] A plane view showing another example of the lithium secondary battery according to the present invention
[Fig. 5] A cross-sectional view showing an example of the absorption sheet according to the present invention
[Fig. 6] A perspective view showing an example of the absorption sheet according to the present invention
[Fig. 7] A perspective view showing an example of use of the absorption sheet according to the present invention
[Fig. 8] A perspective view showing another example of use of the absorption sheet according to the present invention
[Fig. 9] A cross-sectional view showing an example of the lithium secondary battery according to the present invention
[Fig. 10] A cross-sectional view showing an example of the lithium secondary battery according to the present invention
[Fig. 11] A cross-sectional view showing an example of the lithium secondary battery according to the present invention.
[Fig. 12] A cross-sectional view showing an example of the lithium secondary battery according to the present invention
[Fig. 13] A cross-sectional view showing an example of the lithium secondary battery according to the present invention
[Fig. 14] A perspective view showing a preparation process of a specimen according to the Preparation 1 for a specimen without a resin layer containing no inorganic particles
[Fig. 15] A perspective view showing the preparation process of a specimen according to the Preparation 2 for a specimen without a resin layer containing no inorganic particles
[Fig. 16] A perspective view showing the preparation process of a specimen according to the Preparation 1 for a specimen having a resin layer containing no inorganic particles
[Fig. 17] A perspective view showing the preparation process of a specimen according to the Preparation 2 for a specimen having a resin layer containing no inorganic particles

### [Description of the Symbols]

- 1: Positive electrode material
- 2: Negative electrode material
- 3: Positive electrode current collector
- 4: Negative electrode current collector
- 5: Positive electrode plate
- 6: Negative electrode plate
- 7: Layer containing an electrolyte
- 8: Power generating element
- 9: Laminate housing material
- 9a: Drawn laminate housing material
- 10: Sealing portion
- 11: Tight-contact film
- 12: Positive electrode terminal
- 13: Negative electrode terminal
- 14: Absorption sheet
- 15: Resin layer containing no inorganic particles
- 16: Absorption layer
- 17: Laminate comprising an absorption sheet and a separator

## Claims

1. A lithium secondary battery wherein a power generating element comprising a positive electrode material layer, a negative electrode material layer and a layer having a lithium salt electrolyte is sealed in a housing composed of a laminate housing material comprising a metallic layer and a synthetic resin layer, **characterized in that** an absorption sheet is sealed along with the power generating element in the housing, wherein the absorption sheet comprises an absorption layer composed of at least one resin layer containing inorganic particles having an acid absorption function and inorganic particles having a water absorption function, said absorption layer containing at least 5 parts by weight of a total of the inorganic particles having acid absorption function and the inorganic particles having water absorption function relative to 100 parts by weight of the resin.

2. The lithium secondary battery according to Claim 1, wherein the absorption sheet further has resin layers containing no inorganic particles, with which resin layers both surfaces of the absorption layer are laminated.

3. The lithium secondary battery according to Claim 1 or 2, wherein said housing has a sealing portion and at least a part of the sealing portion is sealed via said absorption sheet.

4. The lithium secondary battery according to any one of Claims 1 through 3, wherein the layer containing a lithium salt electrolyte is a porous resin film impregnated with an electrolyte solution containing a lithium salt electrolyte dissolved in a non-aqueous solvent or with a gel electrolyte.

5. The lithium secondary battery according to any one of Claims 1 through 4, wherein said absorption layer is composed of a single resin layer containing inorganic particles having an acid absorption function and inorganic particles having a water absorption function, or is composed of a laminate of a resin layer containing inorganic particles having an acid absorption function and of a resin layer containing inorganic particles having a water absorption function.

6. The lithium secondary battery according to any one of Claims 1 through 5, wherein the inorganic particles having an acid absorption function are one or more selected from the group consisting of zeolite, hydrotalcite, calcined hydrotalcite and hydrotalcite oxide, and the inorganic particles having a water absorption function are one or more selected from the group consisting of zeolite, calcined hydrotalcite, hydrotalcite oxide, and magnesium sulfate hydrated with zero to three molecules of water.

7. The lithium secondary battery according to any one of Claims 1 through 6, wherein the resin in said absorption layer comprises at least one selected from the group consisting of polyethylene, polypropylene, ethylene-butene copolymers, ethylene-propylene copolymers, polymethylpentene, ethylene-vinyl acetate copolymers, ethylene-vinyl alcohol copolymers, ionomers, modified polyethylenes and modified polypropylenes.

8. The lithium secondary battery according to any one of Claims 1 through 7, wherein the absorption layer is radiation cross-linked.

9. The lithium secondary battery according to any one of Claims 2 through 8, wherein the resin in said resin layer containing no inorganic particles comprises at least one selected from the group consisting of polyethylene, polypropylene, ethylene-butene copolymers, ethylene-propylene copolymers, polymethylpentene, ethylene-vinyl acetate copolymers, ethylene-vinyl alcohol copolymers, ionomers, modified polyethylenes and modified polypropylenes.

10. The lithium secondary battery according to any one of Claims 2 through 9, wherein the absorption layer is wholly covered with said resin layer containing no inorganic particles.

11. The lithium secondary battery according to any one of Claims 1 through 10, wherein both or either one of the surfaces of said absorption sheet is embossed.

12. The lithium secondary battery according to any one of Claims 1 through 11, wherein an adhesive agent layer or a bonding agent layer is provided on both or either one of the surfaces of said absorption sheet.
